(19) **Europäisches Patentamt / European Patent Office / Office européen des brevets**

(11) **EP 2 301 649 B1**

(12) **FASCICULE DE BREVET EUROPEEN**

(45) Date de publication et mention
de la délivrance du brevet:
**20.06.2012 Bulletin 2012/25**

(51) Int Cl.:
*B01D 53/86* $^{(2006.01)}$ *F01N 3/20* $^{(2006.01)}$
*F01N 11/00* $^{(2006.01)}$ *G01N 1/22* $^{(2006.01)}$

(21) Numéro de dépôt: **10174165.0**

(22) Date de dépôt: **26.08.2010**

(54) **Procédé de détermination et de suivi de l'activité d'un catalyseur de dénitrification**

Verfahren zur Bestimmung und zur Verfolgung der Aktivität eines Denitrierungskatalysators

Process for the determination and to follow the activity of a denitration catalyst

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **28.08.2009 FR 0955884**

(43) Date de publication de la demande:
**30.03.2011 Bulletin 2011/13**

(73) Titulaire: **LAB SA**
**69006 Lyon (FR)**

(72) Inventeurs:
• **Tabaries, Franck**
**83190, OLLIOULES (FR)**

• **Siret, Bernard**
**69200, VENISSIEUX (FR)**

(74) Mandataire: **Grand, Guillaume et al**
**Cabinet Lavoix**
**62, rue de Bonnel**
**68448 Lyon Cedex 03 (FR)**

(56) Documents cités:
**EP-A1- 1 557 219    EP-A1- 2 108 793**
**JP-A- 4 333 217     JP-A- 10 109 018**
**US-A- 5 628 186     US-A1- 2005 255 605**

**Description**

La présente invention concerne un procédé de détermination et de suivi de l'activité d'un catalyseur de dénitrification.

Dans le domaine industriel, de nombreuses activités génèrent des oxydes d'azote, en particulier la combustion et la production d'acide nitrique. Ces émissions doivent être traitées et, parmi tous les procédés existants, la dénitrification sélective catalytique, dite SCR, occupe une place de choix. En effet elle permet à la fois une destruction poussée des oxydes d'azote (plus de 90% de destruction sont possibles), est active sur d'autres polluants comme les dioxines et les furanes, rencontrés par exemple en incinération, et a une grande souplesse d'utilisation.

Dans ce procédé, on utilise un catalyseur, souvent à base d'oxydes de vanadium et de tungstène, dans une plage de températures comprise entre 150°C et 450°C. On fait passer les gaz ou les fumées à traiter sur ce catalyseur après adjonction d'un réactif, qui est souvent de l'ammoniac, mais peut également être de l'urée ou un alcane.

Comme dans tous les procédés catalytiques, le catalyseur a une durée de vie limitée, laquelle est fortement dépendante des conditions passées auxquelles a été exposé le catalyseur. Par exemple des poisons vont réduire rapidement l'activité, et donc la durée de vie utile du catalyseur. Une accumulation de fines poussières, qui vont obstruer les pores du catalyseur, réduit aussi sa durée de vie.

Pour compenser une baisse graduelle et inéluctable de l'activité, on est conduit à augmenter la température d'utilisation, ou bien la quantité de réactif utilisée, ou bien à tolérer des effets secondaires comme une fuite plus importante en réactif, qui n'est plus complètement utilisé.

Un cas typique est celui de la fuite connue sous le nom de fuite ammoniac, où tout l'ammoniac injecté n'est plus converti. Il y a alors augmentation de la concentration en ammoniac en aval du catalyseur, depuis une valeur de quelques ppm, typiquement 1 à 5, jusqu'à dépasser des seuils d'émission réglementés.

Il est donc absolument critique de pouvoir savoir, à tout moment, dans quel état se trouve le catalyseur pour anticiper son changement.

Traditionnellement, pour ce faire, on extrait lors d'un arrêt de l'installation industrielle un échantillon du catalyseur et on le soumet à des tests en laboratoire, qui permettent de déterminer son activité. Quand celle-ci devient trop faible, par comparaison à l'activité qu'avait le catalyseur quand il était neuf, on programme son changement.

Ceci se heurte à plusieurs problèmes : on dispose en général d'un nombre limité d'échantillons prélevables, placés à cet effet lors de l'installation initiale. Le test en laboratoire n'est pas fait en ligne, et on doit faire face à des délais importants avant de connaître la réponse. Enfin, un arrêt est nécessaire, ce qui induit automatiquement un manque à produire.

Cette évaluation de l'activité est d'une importance telle que des systèmes commerciaux, permettant de déterminer l'état du catalyseur, sans arrêt et sans extraction d'un échantillon, ont été développés. On citera le système connu sous la marque déposée KNOxCheck™, de la société FERCO. On pourra également se reporter à US-A-2005/0255605.

Ceci étant précisé, l'invention vise à remédier aux inconvénients de l'art antérieur évoqués ci-dessus. Elle vise en particulier à proposer un procédé susceptible de suivre l'activité du catalyseur dans le temps, à tout moment, sans faire appel à un dispositif annexe ou à des analyseurs, autres que ceux habituellement installés.

A cet effet, elle a pour objet, un procédé de détermination et de suivi de l'activité d'un catalyseur de dénitrification, tel que défini à la revendication 1.

D'autres caractéristiques de ce procédé sont spécifiées aux revendications dépendantes 2 à 6.

L'invention va être décrite ci-après, en référence aux dessins annexés, donnés uniquement à titre d'exemple non limitatif, dans lesquels :

- la figure 1 est un graphe, illustrant une série de mesures ;
- la figure 2 est une courbe de tendance, qui n'est pas obtenue selon l'invention ;
- la figure 3 illustre une série de mesures, obtenues conformément à la mise en oeuvre de l'invention ;
- la figure 4 est un graphe, illustrant une courbe de tendance obtenue à partir des mesures de la figure 3 ; et
- les figures 5 à 8 sont des courbes de tendance obtenues lors de la mise en oeuvre d'exemples précis.

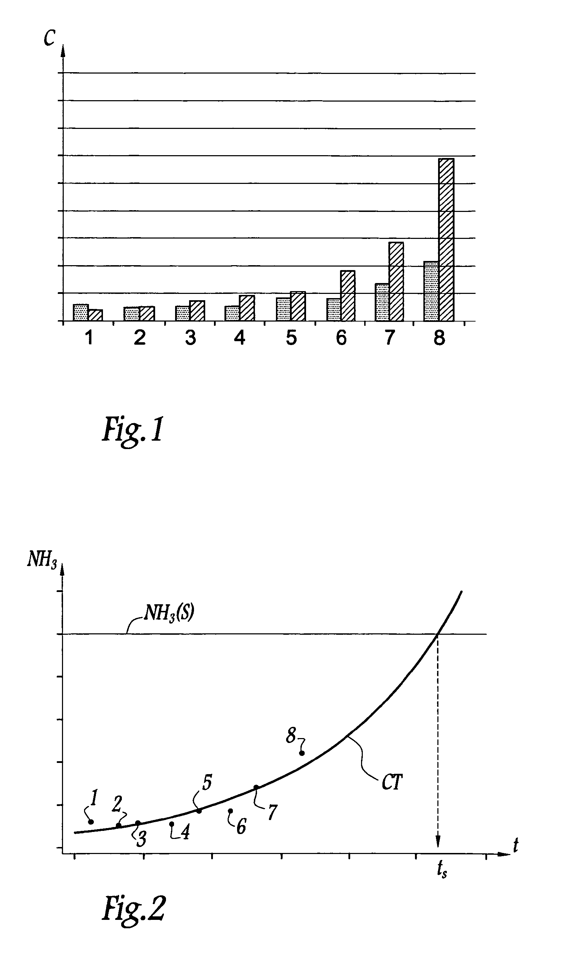

En référence aux figures 1 et 2, on suppose qu'on met en oeuvre, de façon connue en soi, un procédé de dénitrification de fumées. A cet égard, ces fumées sont véhiculées le long d'une installation de type classique, non représentée, et traversent en particulier un catalyseur de dénitrification de type connu en soi.

On réalise plusieurs mesures de valeurs, qui sont caractéristiques du processus de dénitrification. Ces valeurs sont constituées par les concentrations en certains polluants, en aval du catalyseur. En d'autres termes, on mesure la concentration en ces polluants, après le traitement des fumées par le catalyseur.

La figure 1 illustre la réalisation de huit mesures, numérotées de 1 à 8, mises en oeuvre à des dates successives, séparées les unes des autres par un délai de latence compris entre trois et dix-huit mois. La figure 1 montre l'évolution de la teneur en deux polluants, qui sont les NOx et les dioxines. Pour chaque mesure, la teneur en NOx est figurée par la colonne de gauche, alors que celle en dioxines est illustrée par la colonne de droite. De plus, chacune des mesures 1 à 8 permet d'accéder à la concentration en ammoniac NH$_3$, qui n'est pas illustrée sur la figure 1 mais fait l'objet de la figure 2.

On constate que la teneur C en ces polluants augmente au fur et à mesure des mesures, ce qui illustre la perte d'activité du catalyseur. Puis, dans une seconde étape, il s'agit de déduire, à partir des différentes mesures de la figure 1, l'évolution d'au moins un paramètre représentatif de l'efficacité du catalyseur de dénitrification.

Suivant une première approche, qui ne correspond pas à l'invention, ce paramètre est constitué par la teneur des différents polluants, tels que mesurés précédemment. On construit alors une courbe, dite de tendance, pour chacun de ces polluants.

La figure 2 montre cette courbe de tendance, notée CT, pour le cas de la teneur en ammoniac NH$_3$, non représentée sur la figure 1. On retrouve ainsi, tout d'abord, différents points numérotés de 1 à 8, lesquels correspondent aux mesures 1 à 8 de la figure 1. A partir de ces différents points isolés, il est alors possible de tracer une courbe, laquelle présente un type exponentiel sur cette figure 2. De façon plus précise : NH$_3$ = a x e$^{bt}$, où a et b sont des constantes et t le temps.

Par ailleurs, sur cette figure 2, on porte une valeur seuil de concentration en polluants, notée NH$_3$(S). Il est alors possible d'identifier l'instant, noté t$_S$, pour lequel la courbe de tendance CT coupe la droite horizontale, correspondant à la valeur seuil précitée en ammoniac.

La courbe CT est obtenue soit par régression linéaire, soit par une régression faisant passer une courbe exponentielle à travers les points, soit par tout autre type de régression, soit encore par construction à la main. Il est possible de tracer plusieurs courbes, analogues à celles CT de la figure 2, relative aux différents polluants. Chaque courbe est associée une teneur seuil, telle que celle NH$_3$(S). De cette façon, on peut obtenir plusieurs instants seuils, analogues à celui ts.

A partir de toutes ces informations, on retient l'instant seuil le plus court, à savoir celui pour lequel aura lieu le premier dépassement d'une valeur seuil. Ceci permet d'avertir l'opérateur sur la variation prévisionnelle de l'activité de son catalyseur. En d'autres termes, grâce à l'invention, l'opérateur est informé largement à l'avance de l'instant auquel il devra changer son catalyseur. Ceci lui permet par conséquent de prendre toutes les dispositions nécessaires.

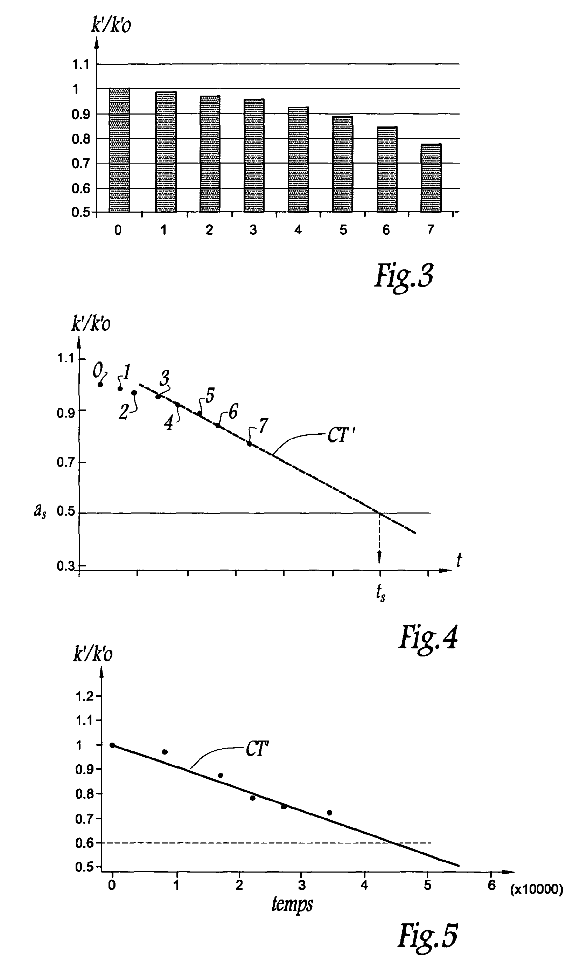

Selon l'invention, en référence aux figures 3 et 4, le paramètre représentatif de l'efficacité du catalyseur est dénommé paramètre d'activité. Il est calculé comme suit :

$$k' = k/(r)^{\alpha},$$

où $\alpha$ est compris entre 0.2 et 1.0, de préférence 0.25 et 0.4, notamment égal à 0.3,

où

$$r = \frac{\left( NH_3/17 \right)}{\left( NOx/46 \right)},$$

où NH$_3$ désigne la concentration de sortie en ammoniac et NOx la concentration de sortie en oxydes d'azote, où

$$k = SV \times Ln(1 - \eta),$$

où $\eta$ est le rendement de destruction des oxydes d'azote, au moment de la mesure, alors que Ln désigne le logarithme népérien, et

où

$$SV = Q/V,$$

où Q est le débit réel de fumées en m$^3$/h et V, le volume de catalyseur en m$^3$.

La concentration de sortie en oxydes d'azote est exprimée en $NO_2$, de façon connue en soi de l'homme du métier. Pour les deux concentrations en $NH_3$ et NOx, les unités peuvent être indifféremment des $mg/m^3$ ou encore des $mg/Nm^3$, avec ou sans correction par rapport à une valeur de référence en oxygène ou en gaz carbonique, du moment que le même système d'unité est utilisé pour ces deux concentrations.

On réalise alors, à des dates successives, différentes mesures du débit de fumées traversant le catalyseur, de la concentration en oxydes d'azote en aval du catalyseur et de la concentration en ammoniac en aval du catalyseur. Ceci permet d'accéder, à partir des formules ci-dessus, à différentes valeurs du paramètre d'activité k'.

Selon une variante avantageuse de l'invention, on utilise la valeur initiale $k'_0$ de ce paramètre d'activité, en tant que valeur de référence. On regroupe alors sur la figure 3 les différentes valeurs, dites d'activité, correspondant aux ratios $k'/k'_0$, $k'_0$ étant la valeur de référence décrite ci-dessus pour la mesure initiale. Ces valeurs décroissent, à partir de 1, ce qui traduit une baisse d'activité du catalyseur. Sur cette figure 3, on retrouve huit mesures à savoir celle 0 pour laquelle $k'/k'_0 = 1$ par construction, ainsi que sept mesures successives 1 à 7.

De façon analogue à ce qui a été décrit plus haut en regard à la figure 2, on construit alors une courbe de tendance CT', à partir des différentes valeurs de $k'/k'_0$, comme le montre la figure 4. On retrouve ainsi les huit valeurs du tableau de la figure 3, numérotées de 0 (pour la valeur de référence) à 7.

On construit alors la courbe de tendance CT' de la même façon que pour la courbe CT de la figure 2. Ainsi, on peut utiliser toute courbe de régression, linéaire ou exponentielle, ou encore procéder à une construction à la main. A partir de cette courbe CT', on détermine l'instant pour lequel la valeur du paramètre d'activité modifié $k'/k'_0$ atteint une valeur prédéterminée.

Sur la courbe de la figure 4, cette valeur seuil correspond à la droite horizontale as, qui en l'occurrence, correspond à une valeur de $k'/k'_0 = 0,5$. De façon avantageuse, on choisit cette valeur seuil comme correspondant à une activité comprise entre 40 et 80 % de l'activité initiale $k'_0$. De plus, l'instant seuil est noté ts.

Grâce à l'invention, la construction de cette courbe de tendance permet de fournir une indication fiable à l'utilisateur, bien avant que le catalyseur n'atteigne une perte d'activité inacceptable.

Bien évidemment, selon une variante de l'invention, l'instant seuil $t_S$ déterminé à l'aide de la courbe CT' peut être comparé à d'autres instants obtenus à l'aide d'autres courbes de tendance, en particulier à le ou aux instants seuils déterminés à l'aide de la ou des courbes CT décrites en regard de la figure 2. Dans ce cas, on peut confronter ces différents instants seuils et choisir le plus court, comme expliqué plus haut.

Deux exemples de réalisation de l'invention vont maintenant être donnés, à titre purement non limitatif :

EXEMPLE 1

Une unité d'incinération de déchets ménagers est équipée d'un système de denitrification catalytique des fumées par SCR. Le débit nominal de l'installation est de 130000 $Nm^3/h$, et la dénitrification SCR opère à 250°C, sous pression atmosphérique. Le volume de catalyseur installé est de 25.9 $m^3$. Le catalyseur est un catalyseur commercial en nid d'abeille, d'une surface spécifique de 801 $m^2/m^3$.

Les données suivantes, concernant différentes mesures de concentrations en NOx et en $NH_3$, ainsi que du débit Q de fumées, ont été accumulées au cours de la vie de l'installation :

| Temps | NOx | $NH_3$ | Q |
|---|---|---|---|
| 0 | 40 | 2 | 255000 |
| 8000 | 45 | 2 | 251000 |
| 16900 | 40 | 3 | 252000 |
| 22100 | 48 | 4 | 250000 |
| 27000 | 60 | 5 | 263000 |
| 34300 | 70 | 4 | 245000 |

Les unités sont en heures pour le temps, $mg/Nm^3$ secs corrigés à 11 % d'oxygène pour les concentrations ; les débits sont en $m^3/h$ réels.

On calcule alors

| Temps | SV | r | k' | $k/k_0$ |
|---|---|---|---|---|
| 0 | 9850 | 0.135 | 45300 | 1.00 |
| 8000 | 9690 | 0.120 | 44100 | 0.97 |
| 16900 | 9730 | 0.203 | 39700 | 0.88 |

(suite)

| Temps | SV | r | k' | $k/k_0$ |
|---|---|---|---|---|
| 22100 | 9650 | 0.225 | 35400 | 0.78 |
| 27000 | 10150 | 0.225 | 33700 | 0.74 |
| 34300 | 9460 | 0.155 | 32600 | 0.72 |

Ceci permet de tracer la courbe de tendance CT', reportée sur la figure 5.

Si l'on s'est fixé par avance un limite de perte d'activité égale à 40 %, correspondant à une valeur seuil de $k'/k'_0 = 0.6$, le catalyseur devra être changé après environ 45 000 heures de fonctionnement.

EXEMPLE 2

Une usine d'incinération a effectué des relevés périodiques de concentrations pour les NOx, l'ammoniac $NH_3$ et les dioxines, qui sont indiqués dans le tableau suivant :

| Temps | $NH_3$ | NOx | Dioxines |
|---|---|---|---|
| 0 | 2 | 50 | 0.03 |
| 8500 | 2 | 55 | 0.03 |
| 17500 | 3 | 58 | 0.04 |
| 23500 | 3 | 62 | 0.06 |
| 31900 | 4 | 72 | 0.07 |

Les unités sont les $mg/Nm^3$ pour les $NH_3$ et les NOx, et les $ngTEQ/Nm^3$ pour les dioxines, ainsi que les heures pour le temps.

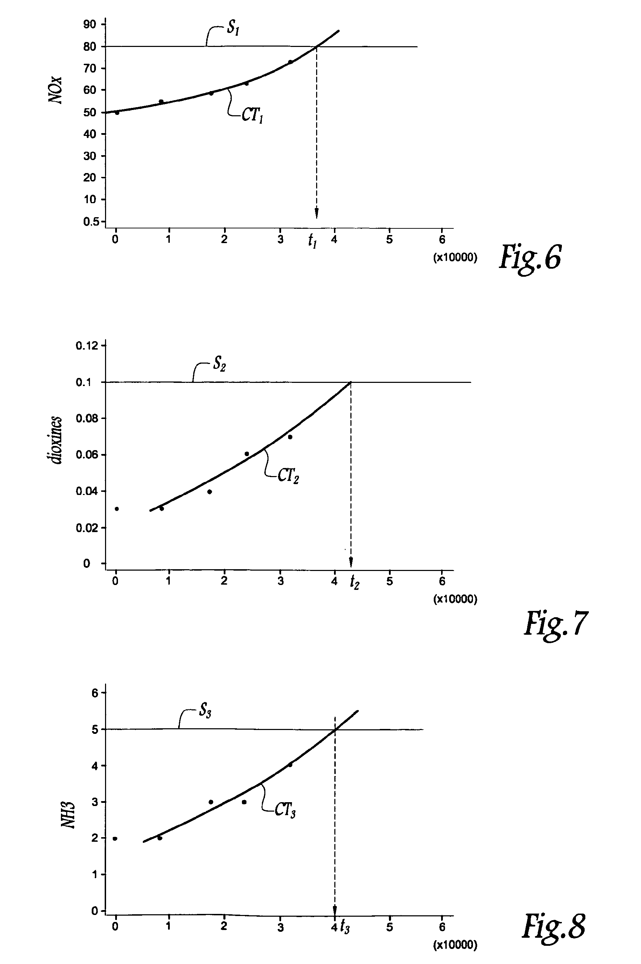

Selon l'invention, en plus de la courbe CT', non représentée pour cet exemple, on construit des courbes de tendance CT1 à CT3 reportées aux figures 6 à 8. On fixe par ailleurs des seuils S1 à S3, égaux à 80 $mg/Nm^3$ pour les NOx, 0.1 $ngTEQ/Nm^3$ pour les dioxines, et à 5 $mg/Nm^3$ pour l'ammoniac. Toutes les valeurs sont exprimées sur sec et corrigées à 11 % d'oxygène. En plus de l'instant seuil $t_S$ associé à la courbe CT', on déduit trois instants seuils, notés $t_1$ à $t_3$, pour lesquels les courbes de tendance CT1 à CT3 atteignent les valeurs seuils. On identifie alors l'instant seuil le plus faible, par exemple celui $t_1$ relatif aux NOx. Dans ce cas, le catalyseur devra être remplacé à une date correspondant à cet instant seuil $t_1$, soit un peu avant 40 000 heures d'âge.

**Revendications**

1. Procédé de détermination et de suivi de l'activité d'un catalyseur de dénitrification, dans lequel :

   - on réalise, à plusieurs dates, des mesures (0-7) de valeurs caractéristiques du fonctionnement du processus de dénitrification, deux dates adjacentes étant espacées entre trois et dix-huit mois, et les valeurs caractéristiques incluant le débit (Q) de fumées traversant le catalyseur, la concentration en oxydes d'azote (NOx) en aval du catalyseur et la concentration en ammoniac ($NH_3$) en aval du catalyseur,
   - on déduit, à partir desdites mesures, l'évolution d'au moins un paramètre (k') représentatif de l'efficacité du catalyseur de dénitrification, ce paramètre représentatif étant un paramètre dit d'activité k', où :

$$k' = k/(r)^{\alpha}$$

où $\alpha$ est compris entre 0,2 et 1, de préférence entre 0,25 et 0,40, encore de préférence voisin de 0,3 ; où

$$k = SV \times Ln(1 - \eta),$$

où $\eta$ est le rendement de destruction des oxydes d'azote, où
$SV = Q/V$,

où Q est le débit réel de fumées en m$^3$/h et V le volume de catalyseur en m$^3$, et

$$r = \frac{\left(NH_3 / 17\right)}{\left(NOx / 46\right)},$$

où NH$_3$ désigne la concentration en sortie en ammoniac et NOx, la concentration en sortie en oxydes d'azote, exprimée en NO$_2$, et

- on identifie, à partir de ladite évolution, l'instant seuil ($t_S$) où le ou chaque paramètre atteint une valeur seuil prédéterminée.

2. Procédé selon la revendication précédente, dans lequel on réalise une première mesure à une première date (0), dite de référence, on calcule la valeur ($k'_0$) de ce paramètre d'activité à cette date de référence et on déduit l'évolution du rapport (k'/k'o) entre le paramètre d'activité (k'), auxdites plusieurs dates, et la valeur ($k'_0$) de ce paramètre à cette date de référence.

3. Procédé selon l'une des revendications précédentes, dans lequel on réalise au moins trois mesures, de préférence au moins cinq mesures.

4. Procédé selon l'une des revendications précédentes, dans lequel on établit par régression, à partir des valeurs du paramètre d'activité (k') pour les différentes mesures, une formule mathématique permettant de déduire l'évolution dudit paramètre.

5. Procédé selon l'une des revendications précédentes, **caractérisé en ce qu'**on identifie plusieurs instants seuils, correspondant à plusieurs paramètres, et on retient l'instant seuil le plus proche.

6. Procédé selon la revendication 5, **caractérisé en ce que** lesdits plusieurs paramètres incluent, en plus du paramètre d'activité (k'), la teneur en oxydes d'azote en aval du catalyseur et/ou la teneur en ammoniac en aval du catalyseur et/ou la teneur en dioxines et furanes en aval du catalyseur.

**Claims**

1. Procedure for the determination and monitoring of the activity of a denitrification catalyst, in which:

measurements are made, on a plurality of dates, of characteristic values of the performance of the denitrification process, two adjacent dates being separated by between three and eighteen months, and the values include the flow (Q) of fumes traversing the catalyst, the concentration of oxides of nitrogen (NOx) downstream of the catalyst and the concentration of ammonia (NH3) downstream of the catalyst,
from these measurements is deduced the progression of at least one parameter (k') representing the efficacy of the denitrification catalyst, this representative parameter being a parameter called activity k', where:

$$k' = k/(r)^{\alpha}$$

where $\alpha$ is between 0.2 and 1, for preference between 0.25 and 0.40 and more preferably in the neighbourhood of 0.3; where:

$$k = SV \times Ln(1-\eta);$$

where
$\eta$ is the yield of destruction of the oxides of nitrogen, where

SV = Q/V where Q is the actual flow of fumes in m$^3$/h and V the volume of the catalyst in m$^3$; and

$$r = [NH_3/17]/[NOx/46]$$

where NH$_3$ indicates the output concentration of ammonia and NOx is the output concentration of oxides of nitrogen, expressed as NO$_2$; and by means of the said progression the threshold instant ($t_s$) when the or each parameter attains a predetermined threshold value is identified.

2. A method according to the foregoing claim, in which a first measurement is made on a first date (0), called reference, the value ($k'_0$) of the parameter of activity at this reference date is calculated and the progression of the relationship between the parameter of activity (k') at the said plurality of dates and the value (k'0) of this parameter at the reference date is determined.

3. A method according to one of the foregoing claims, in which at least three, preferably at least five, measurements are made.

4. A method according to one of the foregoing claims, in which from the values of the parameter of activity from the different measurements is obtained by regression a mathematical formula permitting the determination of the progression of the said parameter.

5. A method according to one of the foregoing claims, **characterised in that** several threshold times corresponding to a plurality of parameters are identified.

6. A method according to one of the foregoing claims, **characterised in that** the said plurality of parameters includes in addition to the parameter of activity (k') the content of oxides of nitrogen downstream of the catalyst and /or the content of ammonia downstream of the catalyst and/or the content of dioxins and furans dowmstream of the catalyst.


**Patentansprüche**

1. Verfahren zur Bestimmung und zur Verfolgung der Aktivität eines Denitrierungskatalysators, in dem:

- man zu mehreren Zeitpunkten Messungen (0-7) von charakteristischen Werten des Funktionierens des Denitrierungskatalysators durchführt, wobei zwei benachbarte Zeitpunkte zwischen 3 und 18 Monate beabstandet sind und die charakteristischen Werte die Durchsatzmenge (Q) an Rauch, die über den Katalysator geht, die Konzentration an Stickstoffoxiden (NO$_x$) stromabwärts des Katalysators und die Konzentration an Ammoniak (NH$_3$) stromabwärts des Katalysators umfassen,
- man ausgehend von den genannten Messungen die Entwicklung wenigstens eines Parameters (k'), der für die Wirksamkeit des Denitrierungskatalysators repräsentativ ist, ableitet, wobei dieser repräsentative Parameter ein Aktivitätsparameter k' ist, wobei:

$$k' = k/(r)^\alpha$$

wobei $\alpha$ zwischen 0,2 und 1, vorzugsweise zwischen 0,25 und 0,40, noch bevorzugter bei etwa 0,3 liegt; wobei

$$k = SV \times Ln(1 - \eta),$$

wobei $\eta$ der Zerstörungsgrad der Stickstoffoxide ist, wobei

$$SV = Q/V$$

wobei Q der tatsächliche Durchsatz von Rauch in m$^3$/h und V das Katalysatorvolumen in m$^3$ ist und

$$r = \frac{\left(\frac{NH_3}{17}\right)}{\left(\frac{NO_x}{46}\right)}$$

wobei $NH_3$ die Konzentration an Ammoniak am Auslass bezeichnet und $NO_x$ die Konzentration an Stickstoffoxiden, ausgedrückt als $NO_2$, am Ausgang bezeichnet und

- man ausgehend von der genannten Entwicklung den Schwellenzeitpunkt ($t_s$) identifiziert, bei dem der oder jeder Parameter einen vorbestimmten Schwellenwert erreicht.

2. Verfahren gemäß dem vorangehenden Anspruch, In dem man eine erste Messung zu einem ersten Zeitpunkt (0), Referenz genannt, durchführt, man den Wert ($k'_0$) dieses Aktivitätsparameters zu diesem Referenzzeitpunkt errechnet und man die Entwicklung des Verhältnisses ($k'/k'_0$) zwischen dem Aktivitätsparameter ($k'$), zu den genannten mehreren Zeitpunkten, und dem Wert ($k'_0$) dieses Parameters zu diesem Referenzzeitpunkt errechnet.

3. Verfahren gemäß einem der vorangehenden Ansprüche, in dem man wenigstens drei Messungen, vorzugsweise wenigstens fünf Messungen, durchführt.

4. Verfahren gemäß einem der vorangehenden Ansprüche, in dem man durch Regression aus den Werten des Aktivitätsparameters ($k'$) für die verschiedenen Messungen eine mathematische Formel ermittelt, die es erlaubt, die Entwicklung dieses Parameters abzuleiten.

5. Verfahren gemäß einem der vorangehenden Ansprüche, **dadurch gekennzeichnet, dass** man mehrere Schwellenzeitpunkte identifiziert, die mehreren Parametern entsprechen, und man den nächsten Schwellenzeitpunkt zurückbehält.

6. Verfahren gemäß Anspruch 5, **dadurch gekennzeichnet, dass** die genannten mehreren Parameter zusätzlich zu dem Aktivitätsparameter ($k'$) den Gehalt an Stickstoffoxiden stromabwärts des Katalysators und/oder den Gehalt an Ammoniak stromabwärts des Katalysators und/oder den Gehalt an Dioxinen und Furanen stromabwärts des Katalysators umfassen.

*Fig.1*

*Fig.2*

*Fig.3*

*Fig.4*

*Fig.5*

*Fig.6*

*Fig.7*

*Fig.8*

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20050255605 A